# EUROPÄISCHE PATENTANMELDUNG

(11) **EP 4 123 986 A1**
(43) Veröffentlichungstag der Anmeldung: **25.01.2023**
(21) Anmeldenummer: 21186579.5
(22) Anmeldetag: 20.07.2021
(51) Int. Cl.: H04L 41/12, G06F 9/455, G06F 9/50, H04L 61/5014

(54) **VERFAHREN ZUR AUTOMATISCHEN ANPASSUNG DER INTERNEN KONFIGURA-TION EINER EXTERNEN NETZWERKSCHNITTSTELLE, COMPUTERPROGRAMM-PRODUKT UND VORRICHTUNG**

(71) Anmelder: Siemens Aktiengesellschaft, 80333 München (DE)
(72) Erfinder: Albrecht, Harald, 90475 Nürnberg (DE); Dreher, Michael, 71229 Leonberg (DE)

(57) **Zusammenfassung**

Die Erfindung betrifft ein Verfahren, ein Computerprogrammprodukt sowie ein System zur automatischen Anpassung der internen Konfiguration einer externen Netzwerkschnittstelle in einem industriellen Automatisierungssystem.

Anwender von Industrial Edge Geräten wollen immer häufiger auch entsprechende Applikationen verwenden welche einen direkten Layer 2 -Netzzugang aufweisen.
Sofern diese Applikationen aber in sogenannten Containern gekapselt sind, erfordert die Konfiguration der Schnittstellen besonderes Wissen, welches über das Domänen-Wissen eines Fachmannes hinausgeht.

Das hier vorgeschlagene Verfahren sowie die Vorrichtung wollen eine Lösung für das angegebene Problem liefern.
Das beschriebene Verfahren befreit den industriellen Anwender in vorteilhafter Weise davon, sich tiefergehendes IT-Wissen über die unterschiedlichen Namen von Netzwerk-Schnittstellen und das Edge-interne virtuelle Netzwerk aneignen zu müssen.

Die Realisierung des erfindungsgemäßen Verfahrens wird als (Logische) "Zwischenschicht" vorgeschlagen, die die für den Anwender sichtbaren Netzwerkparameter aus dessen Anwendersicht anhand der Edge-internen virtuellen Netzwerktopologie auf die jeweils zutreffenden konkreten Netzwerkschnittstellen umsetzt.

## Beschreibung

Die vorliegende Erfindung betrifft ein Verfahren, ein Computerprogrammprodukt sowie ein System ... in einem industriellen Automatisierungssystem.

Industrielle Automatisierungssysteme umfassen üblicherweise eine Vielzahl von über ein industrielles Kommunikationsnetz miteinander vernetzten Automatisierungsgeräten und dienen im Rahmen einer Fertigungs- oder Prozessautomatisierung zur Steuerung oder Regelung von Anlagen, Maschinen bzw. Geräten. Aufgrund zeitkritischer Rahmenbedingungen in industriellen Automatisierungssystemen werden zur Kommunikation zwischen Automatisierungsgeräten überwiegend Echtzeit-Kommunikationsprotokolle, wie PROFINET, PROFIBUS, Real-Time-Ethernet oder Time-Sensitive Networking (TSN) und OPC UA, verwendet. Insbesondere können Steuerungsdienste bzw. -anwendungen automatisiert und auslastungsabhängig auf aktuell verfügbare Server oder virtuelle Maschinen eines industriellen Automatisierungssystems verteilt werden.

Unterbrechungen von Kommunikationsverbindungen zwischen Rechnereinheiten eines industriellen Automatisierungssystems oder Automatisierungsgeräten können zu einer unerwünschten oder unnötigen Wiederholung einer Übermittlung einer Dienstanforderung führen. Außerdem können nicht oder nicht vollständig übermittelte Nachrichten beispielsweise einen Übergang oder Verbleib eines industriellen Automatisierungssystems in einen sicheren Betriebszustand verhindern.

In Ethernet-basierten Kommunikationsnetzen können Probleme entstehen, wenn Netzressourcen für eine Übermittlung von Datenströmen oder von Datenrahmen mit Echtzeitanforderungen konkurrierend für eine Übermittlung von Datenrahmen mit großem Nutzdateninhalt ohne spezielle Dienstgüteanforderungen beansprucht werden. Dies kann schließlich dazu führen, dass Datenströme oder Datenrahmen mit Echtzeitanforderungen nicht entsprechend einer angeforderten bzw. benötigten Dienstgüte übermittelt werden.

Mit der Industrial Edge können beispielsweise automatisierungstechnische Anwender einfach und modular die von ihnen gewünschten Funktionalitäten für ihre Automatisierung in Form sogenannter Apps (Applikationen) installieren, aktualisieren und erweitern. Einerseits profitieren Anwendern von zentralisierter und einfach skalierbarer Verwaltung auch vieler Industrial Edge-Geräte, andererseits vom Markt, der ebenfalls Drittanbieter dieser Apps umfasst. Ein wesentlicher weiterer Aspekt ist der Wunsch der Automatisierungsanwender, Applikationen unterschiedlicher Anbieter möglichst ohne zusätzlichen Integrationsaufwand einfach installieren und sofort in Betrieb nehmen zu können.

Anwender von, mittels Containervirtualisierung oder vergleichbaren Virtualisierungskonzepten realisierten, Steuerungsanwendungen für industrielle Automatisierungssysteme erwarten weiterhin eine möglichst unkomplizierte Integration derartiger Anwendungen in ihre bestehende Infrastruktur. Je nach Netzwerkanbindung und verwendeter Ablaufsteuerungsumgebung treffen beispielsweise OPC UA Server auf höchst unterschiedliche anwenderseitige Konfigurationen, die durch Entwickler von Steuerungsanwendungen bei automatisierten Konfigurationsverfahren für die Steuerungsanwendungen berücksichtigt werden müssen. Bei der Netzwerkanbindung stellen anwenderseitig knappe IP-Adress- und TCP-Portnummernbereiche besondere Herausforderungen im Rahmen der Integration von Steuerungsanwendungen in eine bestehende Infrastruktur dar. Außerdem muss der automatisierungstechnische Anwender die anderen Anteile seiner Automatisierungsapplikation mit den Servern über die konkreten Netzwerkadressierungsinformationen verknüpfen.

Mit der Verwendung der (Industrial) Edge Technologie funktioniert die optimale Datennutzung in der Anwendung, beispielsweise in einer Industriellen Anlage, einfacher, flexibler und sicherer. Das Erfassen und Verarbeiten von Daten erfolgt dezentral, direkt und abgesichert an dem jeweiligen Edge-Gerät, für Verwaltung, und Bereitstellung von Software sowie deren Aktualisierungen steht ein zentrales System zur Verfügung. Das (Industrial) Edge Management System ist die zentrale Infrastruktur, mit der alle verbundenen Edge-Geräte jeder Art verwaltet werden. Anstatt Software-Aktualisierungen und Fehlerkorrekturen (z. B. Security-Patches) auf jedes Edge-Gerät einzeln aufspielen zu müssen, wird alles zentral von einem System aus gesteuert, das je nach Bedarf vor Ort oder auch in der Cloud installiert sein kann.

Auf den Edge-Geräten kann zum Erzeugen und Verwalten von sogenannten Containern beispielsweise die bekannte Software "Docker" verwendet werden, die dank Containervirtualisierung zahlreiche Vorteile aufweist, wie geringer Ressourcenbedarf, schnelle Bereitstellung und eine einfache Handhabung für den Benutzer. Neue Applikationen können in beliebigen Hochsprachen entwickelt werden (nicht abschließend C/C++, Java, Python, Node.js, ...) und dann als sogenanntes Docker-Image virtualisiert werden und dann skalierbar auf allen Edge Geräten ablauffähig sind.

Benötigt wird dafür eine passende Laufzeitumgebung (runtime environment), die zur Laufzeit der Computerprogramme die verfügbaren und festgelegten Voraussetzungen des Laufzeitsystems (runtime system) definiert. Dieses ist durch die elementaren Bestandteile der Programmiersprache, wie beispielsweise das Verhalten von Sprachkonstrukten, und weitere Funktionen, wie Typprüfung, Debugging, Codegenerierung und -optimierung, definiert. Zur Laufzeitumgebung gehören weitere Module wie eine Laufzeitbibliothek, Standardbibliotheken, Programmierschnittstellen, Laufzeitvariablen sowie auf Hard- und Softwarekomponenten über Betriebssystemfunktionen.

Ein Vorteil bei der Verwendung von Industrial Edge besteht für Kunden darin, dass die eingesetzten Container eine vorteilhafte Modularisierung von Automatisierungs-Applikationen liefern, samt deren einheitlicher Verpackung, Transport, Installation und Aktualisierung. Zudem minimieren Container die inzwischen nur noch schwer handhabbaren Abhängigkeiten zwischen Anwendungen, Hilfsbibliotheken und dem Betriebssystem, ganz ohne den riesigen Mehrbedarf an Ressourcen der traditionellen Virtuellen Maschinen (VMs).

Der Einsatz containerisierter Automatisierungs-Applikationen in einer Industrial Edge in der industriellen Produktion weicht dabei in manchen Belangen vom Container-Einsatz in einer herkömmlichen Datacenter/Cloud-Umgebung ab, wie insbesondere deren Vernetzung. So werden Industrial Edge Geräte oftmals an mehrere, strikt voneinander getrennte Netzwerke angebunden, wie beispielsweise Fabrik- und davon separate Maschinen/Zellen-Netzwerke. Je nach verwendeter (Industrie PC-) Gerätehardware wird der industrielle Anwender mit, in verwirrender Weise variierenden, Hardware-Bezeichnern im Betriebssystem eines Industrial Edge Gerätes konfrontiert, die zudem nicht einmal mit den auf dem Gehäuse eingravierten Beschriftungen übereinstimmen.

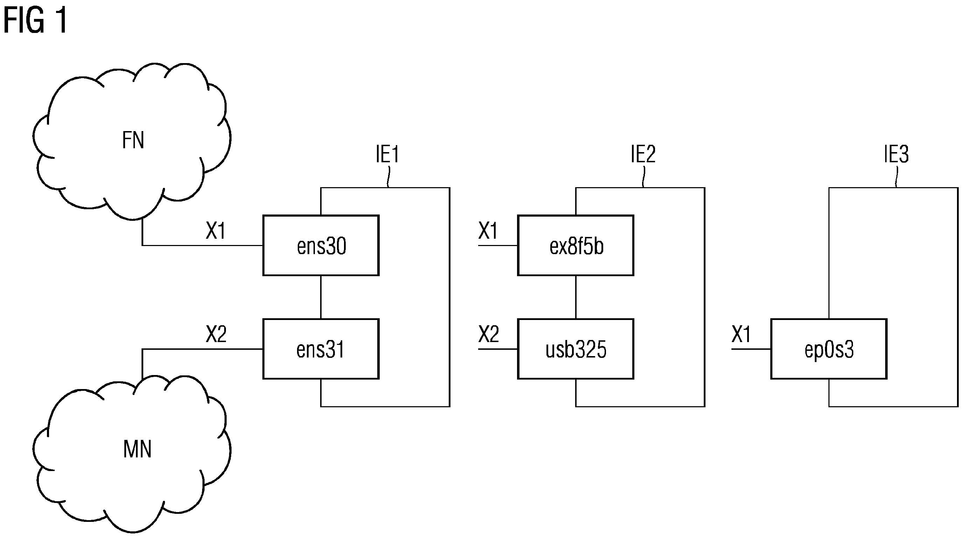

Figur 1 illustriert ein solches Beispiel, mit drei Industrial Edge Geräten IE1, IE2, IE3, welche auf unterschiedlicher Hardware basieren, wobei zwei der Geräte IE1 und IE2 jeweils zwei Schnittstellen mit den (identischen) Bezeichnern X1, X2 aufweisen zum Anschluss beispielsweise an ein Fabriknetz FN einerseits, und ein Maschinennetz MN andererseits. Dabei sind die Bezeichner der jeweiligen Schnittstellen X1 und X2 in dem ersten Industrial Edge Gerät IE1 hinterlegt mit den Adressen "ens30" und "ens31", beim zweiten Gerät IE2 mit den Adressen "ex8f5b" und "usb325". Das dritte Gerät IE3 weist sowieso nur eine Schnittstelle mit der Bezeichnung X1 auf mit der Adresse "ep0s3".

Oftmals benutzen industrielle Anwender containerisierte Applikationen, die einen direkten Data Link Layer-Zugang ("Layer 2-Zugang" beispielsweise zum Maschinennetz) benötigen, um Automatisierungsgeräte mit den heute im industriellen Umfeld gängigen Kommunikations-Protokollen wie PROFINET anzusprechen. Tatsächlich gehören zur Basisausstattung der Industrial Edge mehrere solche Schicht 2 / Layer 2 / Data Link Layer-Applikationen, beispielsweise eine Verzeichnis Applikation, die sogenannte "Inventory App" für Automatisierungsgeräte. Mit dieser Applikation können Geräteinformationen gescannt, Bestandsinformationen für andere Systeme und Tools bereitgestellt und der Handlungsbedarf zur Gewährleistung der Geräteverfügbarkeit bestimmt werden.

Die Container derartiger Layer 2-Applikationen können dabei mit den heute verfügbaren virtuellen Netzwerkelementen der Betriebssysteme innerhalb einer Industrial Edge mit dem oder den Automatisierungsnetzen geeignet verbunden werden, beispielsweise mit Hilfe von virtuellen Bridges, virtuellen Ethernet-Kabeln und MACVLAN-Schnittstellen bei Linux.

Dabei sind heute verschiedene Konfigurationen bekannt, um den gewünschten Layer 2-Zugang zu erzielen, insbesondere:
(1) per MACVLAN und alternativ
(2) per Bridge, der eine Geräte-Netzwerkschnittstelle zugeordnet ("enslaved") wird, sowie Virtual Ethernet (VETH)-Verkabelungen zu den einzelnen Geräten.

Hierbei ist insbesondere die Konfiguration (2) für den Einsatz in der Industrial Edge interessant, zugleich soll es aber weiterhin möglich sein, bei (Kunden-) Bedarf auch die alternative Konfiguration (1) anzubieten. Setzt ein Kunde allerdings keinerlei Schicht 2 / Layer 2-Applikationen ein, dann soll auch keine der Konfigurationen in einer Industrial Edge aktiviert sein.

Eine Bridge ist ein Gerät, das zwei Datalink / Layer 2-Segmente (z. B. Ethernet) miteinander verbindet. Datenpakete, sogenannte Frames zwischen den beiden Segmenten werden basierend auf den Layer 2-Adressen (d. h. MAC-Adressen) weitergeleitet. Eine Bridge kann sowohl als physisches Gerät oder komplett in Software implementiert werden.

Mit MACVLAN können mehrere Layer 2- (also in dem obigen Beispiel: Ethernet-MAC-) Adressen auf einer einzigen physikalischen Schnittstelle konfiguriert werden, Sub-Schnittstellen (auch als Slave-Geräte bezeichnet) einer übergeordneten, physischen Ethernet-Schnittstelle (auch als Master-Gerät bezeichnet) konfiguriert, jede mit ihrer eigenen eindeutigen (zufällig generierten) MAC-Adresse und folglich ihrer eigenen IP-Adresse. Anwendungen, VMs und Container können sich dann an eine bestimmte Sub-Schnittstelle binden, um sich direkt mit dem physischen Netzwerk zu verbinden, wobei sie ihre eigene MAC- und IP-Adresse verwenden.

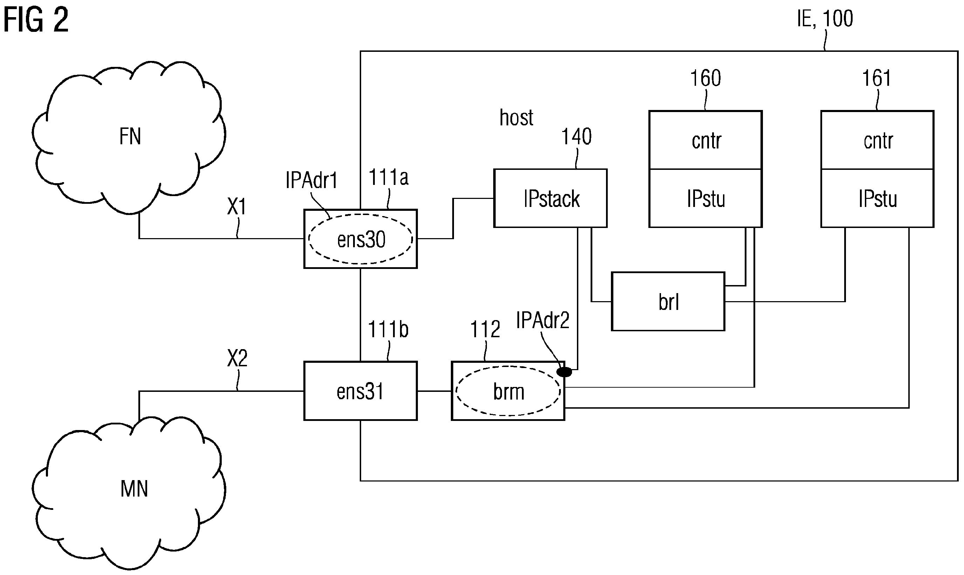

Nachteilig ist bei der oben beschriebenen Konstellation, dass sich insbesondere bei der Konfiguration (2) mit einer Bridge die interne Netzwerkstruktur insofern verändert, als die für die Einbindung in die externen Fabrik-, FN und Maschinennetzwerke, MN mit den korrekten (IP-) Adressen, IPAdr1, IPAdr2 zu konfigurierenden Netzwerkschnittstellen ändern. Dies ist in der Figur 2 illustriert.

In dem Industrial Edge Gerät IE, 100 sind zwei Container 160, 161, mit jeweils einem zugehörigen IP-Stack, IPstu, und einer Applikation, cntr installiert. Es existiert ein weiterer zentraler IP-Stack, 140, der über eine Bridge, brl, mit den Containern 161, 160 über Layer 2, IPstu verbunden ist und auf der anderen Seite mittels einer zweiten Bridge, brm, mit den jeweiligen Geräteschnittstellen 111a und 111b, des Industrial Edge Gerätes, welche mit der Bezeichnung X1 und X2 von Factory Netz FN beziehungsweise dem Maschinennetzwerk MN bekannt sind.

Konkret darf in der Konfiguration (2) mit einer Bridge nicht mehr wie zuvor, die Hardware-Schnittstelle, hier 111a, 111b mit den Werten IPAdr 1 "ens30" bzw. "ens31", zu einem Automatisierungsnetz IP-technisch konfiguriert werden, sondern es muss stattdessen die interne virtuelle Bridge brm, 112 IP-technisch mit der Adresse IPAdr2 konfiguriert werden.

Das vorgenannte Problem wird heute manuell mit Hilfe von Experten gelöst. Diese Experten konfigurieren nach Kundenanforderung die Systeme entsprechend erstmalig oder als Service später im Betrieb bei geänderten Anforderungen. Technische Werkzeuge zur Unterstützung fehlen weitgehend.

Heute bekannte Netzwerk-Werkzeuge wie beispielsweise "netmanager" (https://en.m.wikipedia.org/wiki/NetworkManager) im Linux-Umfeld sowie gängige Netzwerk-Konfigurationsoberflächen sind Schnittstellen-orientiert und bieten keine Abstraktionen an. Insbesondere sind sie nicht explizit darauf ausgelegt, dem Anwender beim Konfigurieren der quasi-statischen Anteile der virtuellen geräte-internen Netzwerke zu helfen, sondern erwarten vom Anwender das notwendige Fachwissen, insbesondere die IP-Konfiguration eigenständig korrekt vorzunehmen zu können, und gleichzeitig zu wohlmeinende Netzwerk-Werkzeuge davon abhalten, konflikterzeugende Einstellungen unerwünscht vorzunehmen.

Im Cluster- und Container-Umfeld bietet das Programm "multus" (https://github.com/intel/multus-cni, ein sogenanntes Container Network Interface, CNI-Plugin für die Netzwerkkonfiguration in Container-Systemen) zwar eine Abstraktion in Form von Netzwerknamen anstatt von Schnittstellennamen, jedoch muss der IT-Experte auch hier für jeden Knoten einzeln die konkrete system-spezifische Abbildung dem CNI-Plugin per Konfigurationsdatei mitteilen.

"Multus" bietet damit eine technische Lösung für die Problemstellung an, Container anhand logischer Netzschnittstellennamen auf die konkreten Schnittstellen abzubilden.

Die Attraktivität der Industrial Edge-Plattform steigt, wenn eine Konfiguration von Schnittstellen, nicht in Abhängigkeit von IT-Experten mit fehlendem oder zumindest mangelhaftem Verständnis für die Hintergründe der Automatisierungstechnik sondern optimalerweise automatisiert erfolgen könnte.

Es ist Aufgabe der Erfindung, in der beschriebenen Umgebung des (Industrial) Edge eine Unterstützung und Automatisierung anzubieten für die eigenständige Anpassung der IP-Konfiguration an wechselnde virtuelle Netzwerktopologien.

Die Aufgabe wird gelöst durch ein Verfahren mit den Merkmalen des Patentanspruch 1.

Die Aufgabe wird weiterhin gelöst durch ein Computerprogrammprodukt mit den Merkmalen des Patentanspruchs 7.

Zuletzt wird die Aufgabe gelöst mittels einer Vorrichtung, gemäß den Merkmalen des unabhängigen Patentanspruchs 8.

Vorteilhafte Aus- und Weiterbildungen sind durch die Unteransprüche angegeben.

Das erfindungsgemäße Verfahren zur automatischen Anpassung der internen Konfiguration einer externen Netzwerkschnittstellen an einem Gerät, wobei das Gerät einen internen, gerätezugehörigen, ersten Kommunikations-Stack umfasst, und Dienstkomponenten, die jeweils durch eine in eine Ablaufsteuerungsumgebung ladbare und dort ausführbare Ablaufsteuerungskomponente gekapselt sind und über einen eigenen, zweiten Kommunikations-Stack verfügen,
wobei der erste Kommunikations-Stack und der zumindest zweite Kommunikations-Stack über interne virtuelle Netzwerke mit den Netzwerkschnittstellen (HNIF) verbunden sind,
umfasst folgende Schritte:
- Ermitteln von Topologie-Informationen über interne virtuelle Netzwerke (IVN) und die Netzwerkschnittstellen (HNIF), wobei die Topologie-Informationen auch Informationen über die zugrundeliegende Netz-Technologie enthält,
- Ermitteln, ob die Netzwerkschnittstelle (HNIFa, HINFb) direkt mit dem internen gerätezugehörigen Kommunikations-Stack (HIP) verbunden ist, ansonsten
- Ermitteln eines Weges einer Verbindung von Netzwerkschnittstelle (HNIFa, HINFb) zu dem internen gerätezugehörigen Kommunikations-Stack (HIP) in dem internen virtuellen Netzwerk (IVN), und
- Überschreiben der Konfiguration anhand der ermittelten Topologie-Information und Netz-Technologie Information.

Ablaufsteuerungskomponenten sind insbesondere Software-Container, die jeweils von anderen Software-Containern oder Container-Gruppen isoliert innerhalb der Ablaufsteuerungsumgebung auf einem Host-Betriebssystem einer Server-Einrichtung ablaufen. Grundsätzlich können für die Ablaufsteuerungskomponenten auch alternative Micro-Virtualisierungskonzepte, wie Snaps, verwendet werden.

Die Ablaufsteuerungsumgebung kann beispielsweise eine Docker Engine oder einen Snap Core umfassen, die auf einer Server-Einrichtung abläuft. Vorteilhafterweise nutzen die Software-Container jeweils gemeinsam mit anderen auf der jeweiligen Server-Einrichtung ablaufenden Software-Containern einen Kernel des Host-Betriebssystems der Server-Einrichtung. Speicherabbilder für die Software-Container können beispielsweise aus einem durch eine Vielzahl von Nutzern lesend bzw. schreibend zugreifbaren Speicher- und Bereitstellungssystem abgerufen werden.

Die Realisierung des erfindungsgemäßen Verfahrens wird als (Logische) "Zwischenschicht" vorgeschlagen, die die für den Anwender sichtbaren Netzwerkparameter aus dessen Anwendersicht anhand der Edge-internen virtuellen Netzwerktopologie auf die jeweils zutreffenden konkreten Netzwerkschnittstellen umsetzt.

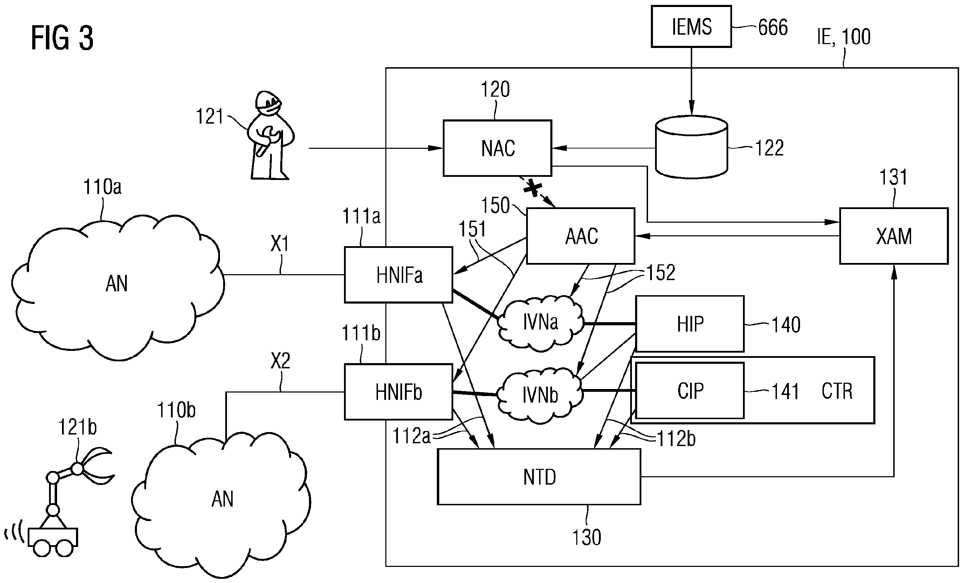

Die Figur 3 zeigt einen beispielhaften Aufbau eines neuartigen Industrial Edge Gerätes IE, 100 umfassend die beanspruchte Vorrichtung, der sogenannte "Translator Manager" XAM, 131. Es ist dabei angenommen, dass dieses Gerät sowohl in Hardware als auch in Software als sogenanntes "virtuelles" Geräte ausgebildet sein kann.

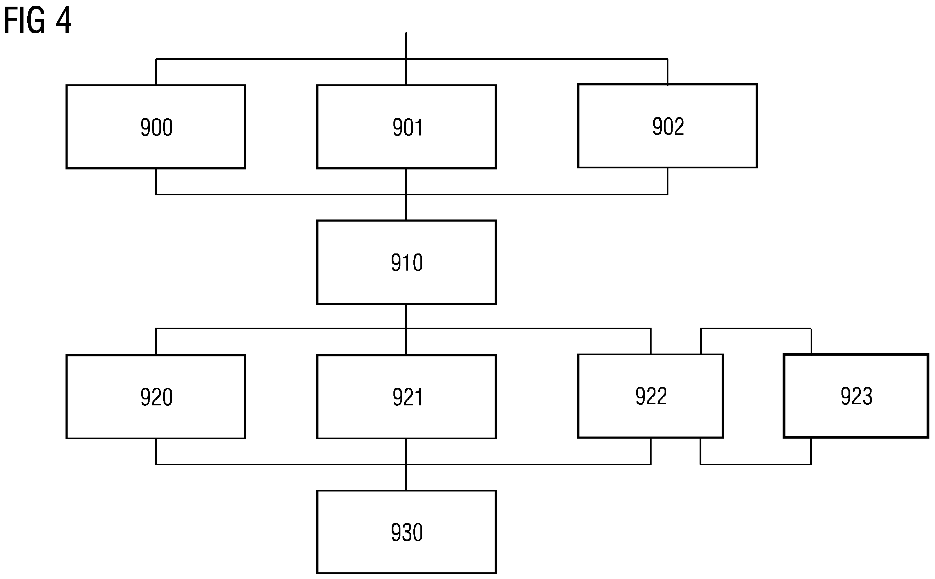

Das Industrial Edge Gerät IE, 100 verfügt über zumindest eine, typischerweise aber mehrere physikalische Netzwerkschnittstellen HNIFa, HNIFb, 111a, 111b zur Umgebung. Die physikalischen Netzwerkschnittstellen sind mit separaten (Automatisierungs-) Netzwerken verbunden, wie beispielsweise den Fabrik- oder Maschinennetzwerken AN 110a, 110b, über die auch weitere, an das Maschinennetzwerk AN angeschlossene Geräte, 121b, beispielsweise zur Bearbeitung von Werkstücken angesteuert werden können. Industrial Edge-intern sind die Netzwerkschnittstellen HNIFa, HNIFb über virtuelle interne Netzwerke IVNa, IVNb sowohl mit dem Kommunikations-IP-Stack, HIP, 140 des Industrial Edge Gerätes selbst verbunden, als auch mit den einzelnen IP-Stacks CIP, 141 von den gespeicherten Containern, CTR, die einen direkten Schicht / Layer 2-Zugang erfordern. Der Anwender entscheidet hierbei, in welchem Umfang den Schicht/Layer 2 -Containern Zugang zu welchen der Automatisierungsnetze AN, 110a, 110b gegeben wird. Diese Anwenderwahl entscheidet darüber, ob und in welcher Form die IVN 112a, 112b konkret ausgestaltet sind: die einzelnen Schritte des Ablaufs werden auch in der Figur 4 exemplarisch dargestellt.

Ohne Schicht/Layer 2-Zugang wird zur Optimierung der Systemperformance die jeweilige Netzwerkschnittstelle HNIFa, HNIFb direkt einem Host IP-Stack des Gerätes, HIP zugeordnet und muss IP-technisch konfiguriert werden. Diese Möglichkeit ist in der Figur 2 so direkt nicht abgebildet. Wir nennen diesen Fall für die weitere Erklärung auch Konfiguration (0). Dies entspricht in der Figur 4 dem linken Baumsegment, 900.

Mit Schicht / Layer 2-Zugang in Form von MACVLAN, der oben genannten Konfiguration (1), muss aufgrund technischer Randbedingungen in der Funktion von MACVLAN-Schnittstellen eine zusätzliche MACVLAN-Schnittstelle für den Host eingerichtet und IP-technisch konfiguriert werden, dies entspricht in der Figur 4 dem mittleren Baumsegment, 901.

Mit Schicht / Layer 2-Zugang in Form einer virtuellen Bridge, der oben genannten Konfiguration (2), wird stattdessen die Netzwerkschnittstelle HNIF dem Host IP-Stack, HIP sozusagen entzogen und der virtuellen Bridge "untergeordnet" (in Linux-Terminologie "enslaved"). Die IP-Konfiguration für den Zugang zum jeweiligen Maschinennetzwerk AN muss nun anstatt bei der Netzwerkschnittstelle HNIFa, HNIFb an der virtuellen Bridge erfolgen. Dies entspricht in der Figur 4 dem rechten Baumsegment, 902.

Ein Translator Manager, XAM, 131 erfasst die für ihn relevanten Informationen über die physikalischen Netzwerkschnittstellen HNIFa, HNIFb und die vorliegenden internen virtuellen Netzwerke IVNa, IVNb über einen Network Topology Detector, NTD, 130. Dieser Schritt wird für alle 3 Ausführungsformen durchgeführt, 910.

Diese kann technisch beispielsweise (aber nicht ausschließlich) in Form des Linux RTNETLINK API (https://man7.org/linux/man-pages/man7/rtnetlink.7.html), ausgeführt sein, über das die Informationen über die Netzwerkschnittstellen und deren (netz-topologischen) Beziehungen abfragbar sind.

Der Translator Manager XAM, 131 ermittelt nun auf Basis der Topologie, ob eine Netzwerkschnittstelle HNIF(a, b) direkt am Host IP-Stack HIP angeschlossen ist; das entspricht der oben beschriebenen Konfiguration (0). In diesem Fall vermerkt er, dass die Netzwerkschnittstelle HNIF(a, b) direkt IP-technisch konfiguriert werden muss, Schritt 920. Dies entspricht dem bereits bekannten, in der Beschreibungseinleitung beschriebenen Verfahren.

Andernfalls sucht der Translator Manager XAM einen (oder ggf. mehrere) Pfad(e), die von der Netzwerkschnittstelle HNIF(a, b) über virtuelle Bridges oder MACVLAN führen:
Der Translator Manager XAM schlägt in den Topologie-Informationen nach, ob die Netzwerkschnittstelle HNIF(a, b) ein oder mehrere MACVLANs assoziiert hat (Konfiguration (1)): ist ein solches MACVLAN mit dem Host IP-Stack HIP verbunden, wird es in einer Datenbank, 122, als IP-technisch zu konfigurieren (also IP-Adresse(en) und eventuell IP-Routen und eine DHCP-Client-Identifikation), und der Netzwerkschnittstelle HNIF bzw. dem Maschinennetzwerk AN logisch zugeordnet markiert, Schritt 921.

Der Translator Manager XAM schlägt in den Topologie-Informationen nach, ob die Netzwerkschnittstelle HNIF(a, b) mit einer Bridge assoziiert ist (Konfiguration (2)): wenn ja, prüft der Translator Manager XAM, ob die Bridge mit dem Host IP-Stack HIP assoziiert ist und markiert die Bridge dann in einer Datenbank, 122, als IP-technisch zu konfigurieren und die Netzwerkschnittstelle HNIF bzw. das Maschinennetzwerk AN logisch zugeordnet, Schritt 922.

Der Translator Manager XAM verfolgt die mit der vorgenannten Bridge per Virtuellem Ethernet (VETH) verbundenen weiteren Bridges (unter Beachtung möglicher Zyklen) und wiederholt dort die Prüfung, ob weitere Bridges IP-technisch zu konfigurieren und der Netzwerkschnittstelle HNIF(a, b) bzw. dem Maschinennetzwerk AN logisch zugeordnet sind, Schritt 923.

Der Translator Manager, XAM, 131 steuert nun den oder die Address-Auto-Configurator, AAC, 150, derart an, dass diese je nach Systemkonfiguration anstatt einer Netzwerkschnittstelle HNIFa, HNIFb nun die logisch zugeordnete Netzwerkschnittstelle, beispielsweise eine Bridge, IVNa, IP-technisch konfigurieren, Schritt 930.

Über die "ursprüngliche" IP-Konfiguration des Network Address Configurators NAC, 120, gibt beispielsweise ein Anwender 121, oder das Industrial Edge Management System, IEMS, 666, eine (statische) IP-Konfiguration für die Netzwerkschnittstelle HNIF(a, b), 111a, 111b für den Betrieb des Industrial Edge-Gerätes IE, 100 in den Automatisierungsnetzen AN, 110a, 110b, vor. Der Translator Manager, XAM übernimmt diese Informationen vom Network Address Configurator, NAC und steuert anstatt des Network Address Configurator, NAC nun den Address Auto-Configuration AAC entsprechend.

Alternativ kann der Translator Manager, XAM auch den Network Address Configurator NAC so ansteuern und dessen IP-Konfiguration derart ändern, dass anstatt der Netzwerk-schnittstelle HNIF je nach Systemkonfiguration stattdessen die virtuellen Bridges mit den gewünschten statischen IP-Adressen konfiguriert werden oder DHCP (das Dynamic Host Configuration Protocol, RFC2131) bei diesen aktiviert wird.

Das vorstehend beschriebene Verfahren befreit den industriellen Anwender in vorteilhafter Weise davon, sich tiefergehendes IT-Wissen über die unterschiedlichen Namen von NetzwerkSchnittstellen und das Edge-interne virtuelle Netzwerk aneignen zu müssen.

Bei der Installation und Deinstallation von Schicht / Layer 2-Applikationen installiert oder deinstalliert, die die virtuelle Netzwerk-Topologie in der Edge verändern.

Das beschriebene Verfahren kann mit dem vorgenannten Stand der Technik derart integriert werden, dass die heute für Anwender aus der Automatisierungstechnik fehlende Schnittstellen-Abstraktion den existierenden Werkzeugen nachgerüstet wird. Dieses kann im Fall des "networkmanager" beispielsweise über dessen dbus-Schnittstelle dynamisch zur Laufzeit erfolgen.

## Patentansprüche

1. Verfahren zur automatischen Anpassung der internen Konfiguration einer externen Netzwerkschnittstellen (HNIF) an einem Gerät (IE), wobei das Gerät
einen internen, gerätezugehörigen, ersten Kommunikations-Stack (HIP, 140) umfasst, und
Dienstkomponenten, die jeweils durch eine in eine Ablaufsteuerungsumgebung ladbare und dort ausführbare Ablaufsteuerungskomponente (160, 161) gekapselt sind und über einen eigenen, zweiten Kommunikations-Stack (CIP, 141) verfügen,
wobei der erste Kommunikations-Stack (HIP, 140) und der zumindest zweite Kommunikations-Stack (CIP, 141) über zumindest ein internes virtuelles Netzwerk (IVNa, IVNb) mit den Netzwerkschnittstellen (HNIFa, HNIFb, 111a, 111b) verbunden sind, mit folgenden Schritten:
- Ermitteln von Topologie-Informationen über interne virtuelle Netzwerke (IVNa, IVNb) und die Netzwerkschnittstellen (HNIF), wobei die Topologie-Informationen auch Informationen über die zugrundeliegende Netz-Technologie enthält,
- Ermitteln, ob die Netzwerkschnittstelle (HNIFa, HNIFb, 111a, 111b) direkt mit dem internen gerätezugehörigen Kommunikations-Stack (HIP, 140) verbunden ist, ansonsten
- Ermitteln eines Weges einer Verbindung von Netzwerkschnittstelle (HNIFa, HNIFb, 111a, 111b) zu dem internen gerätezugehörigen Kommunikations-Stack (HIP, 140) in dem internen virtuellen Netzwerk (IVNa, IVNb), und
- Überschreiben der Konfiguration anhand der ermittelten Topologie-Information und Netz-Technologie Information.

2. Verfahren zur automatischen Anpassung der internen Konfiguration von Netzwerkschnittstellen (HNIFa, HNIFb, 111a, 111b) an einem Gerät (IE), gemäß Patentanspruch 1,
**dadurch gekennzeichnet, dass**
die Kommunikation zu dem Kommunikationsstack auf Basis eines Layer 2 Zugangs erfolgt.

3. Verfahren zur automatischen Anpassung der internen Konfiguration von Netzwerkschnittstellen (HNIF) an einem Gerät (IE), gemäß einem der vorherigen Patentansprüche,
**dadurch gekennzeichnet, dass**
die zugrundeliegende Netz-Technologie einen MACVLAN Anschluß umfasst, und
die Konfiguration zumindest dahingehend überschrieben wird, dass der MACVLAN Anschluß als der externen Netzwerk-Schnittstelle (HNIFa, HNIFb, 111a, 111b) zugehörig markiert wird.

4. Verfahren zur automatischen Anpassung der internen Konfiguration von Netzwerkschnittstellen (HNIFa, HNIFb, 111a, 111b) an einem Gerät (IE), gemäß einem der vorherigen Patentansprüche,
**dadurch gekennzeichnet, dass**
die zugrundeliegende Netz-Technologie mit einer Bridge per Virtual Ethernet VETH assoziiert ist, und
die Konfiguration zumindest dahingehend überschrieben wird, dass die Bridge als der externen Netzwerk-Schnittstelle (HNIFa, HNIFb, 111a, 111b) zugehörig markiert wird.

5. Verfahren zur automatischen Anpassung der internen Konfiguration von Netzwerkschnittstellen (HNIFa, HNIFb, 111a, 111b) an einem Gerät (IE), gemäß Patentanspruch 4,
**dadurch gekennzeichnet, dass**
anhand der zugrundeliegenden Information an der Bridge das Dynamic Host Configuration Protocol DHCP aktiviert wird.

6. Verfahren zur automatischen Anpassung der internen Konfiguration von Netzwerkschnittstellen (HNIFa, HNIFb, 111a, 111b) an einem Gerät (IE), gemäß einem der vorherigen Patentansprüche,
**dadurch gekennzeichnet, dass**
das Gerät (IE) ein virtuelles Gerät ist.

7. Computerprogrammprodukt zur automatischen Anpassung der internen Konfiguration von Netzwerkschnittstellen an einem Gerät (IE) gemäß den Verfahrensschritten eines der vorherigen Patentansprüche.

8. Vorrichtung (XAM, 131) zur automatischen Anpassung der internen Konfiguration einer externen Netzwerkschnittstellen (HNIFa, HNIFb, 111a, 111b) an einem Gerät (IE, 100) mit einem internen, gerätezugehörigen, ersten Kommunikations-Stack (HIP, 140), und
Dienstkomponenten, die jeweils durch eine in eine Ablaufsteuerungsumgebung ladbare und dort ausführbare Ablaufsteuerungskomponente (160, 161) gekapselt sind und jeweils über einen zweiten Kommunikations-Stack (CIP, 141) verfügen,
wobei der erste Kommunikations-Stack (HIP, 140) und der zweite Kommunikations-Stack (CIP, 141) über interne virtuelle Netzwerke (IVN) mit der externen Netzwerkschnittstelle (HNIFa, HNIFb, 111a, 111b) verbunden sind, wobei
- die Vorrichtung (XAM, 131) geeignet und eingerichtet ist, Topologie-Informationen zu internen den virtuellen Netzwerken (IVN) und den Netzwerkschnittstellen (HNIFa, HNIFb, 111a, 111b) zu empfangen, wobei die Topologie-Informationen auch Informationen über die zugrundeliegende Netz-Technologie enthält,
- die Vorrichtung (XAM, 131) geeignet ist, auf Basis der empfangenen Topologie-Informationen zu erkennen, ob die Netzwerkschnittstelle (HNIFa, HNIFb, 111a, 111b) direkt mit dem internen gerätezugehörigen Kommunikations-Stack (HIP) verbunden ist
und
- die Vorrichtung (XAM, 131) geeignet und eingerichtet ist, auf Basis der empfangenen Topologie-Informationen einen Weg zu ermitteln für eine Verbindung von Netzwerkschnittstelle (HNIFa, HNIFb, 111a, 111b) zu dem internen gerätezugehörigen Kommunikations-Stack (HIP) in dem internen virtuellen Netzwerk (IVNa, IVNb), und
- die Vorrichtung (XAM, 131) geeignet und eingerichtet ist Informationen zum Überschreiben der Konfiguration anhand der ermittelten Topologie-Information und Netz-Technologie an einen Address-Konfigurator (AAC, 150) zu übermitteln.

9. Vorrichtung (XAM, 131) zur automatischen Anpassung der internen Konfiguration einer externen Netzwerkschnittstellen (HNIF) an einem Gerät (IE, 100) gemäß Patentanspruch 8, **dadurch gekennzeichnet, dass**
die Kommunikation zu dem Kommunikationsstack auf Basis eines Layer 2 Zugangs erfolgt.

10. Vorrichtung (XAM) zur automatischen Anpassung der internen Konfiguration einer externen Netzwerkschnittstellen (HNIFa, HNIFb, 111a, 111b) an einem Gerät (IE) gemäß Patentanspruch 8 oder 9,
**dadurch gekennzeichnet, dass**
die zugrundeliegende Netz-Technologie einen MACVLAN Anschluß umfasst, und
die Konfiguration zumindest dahingehend überschrieben wird, dass der MACVLAN Anschluß als der externen Netzwerk-Schnittstelle (HNIFa, HNIFb, 111a, 111b) zugehörig markiert wird.

11. Vorrichtung (XAM) zur automatischen Anpassung der internen Konfiguration einer externen Netzwerkschnittstellen (HNIFa, HNIFb, 111a, 111b) an einem Gerät (IE, 100) gemäß einem der Patentansprüche 8 bis 10,
**dadurch gekennzeichnet, dass**
die zugrundeliegende Netz-Technologie mit einer Bridge per Virtual Ethernet VETH assoziiert ist, und
Informationen zum Überschreiben der Konfiguration die Bridge als der externen Netzwerk-Schnittstelle (HNIFa, HNIFb, 111a, 111b) zugehörig markiert.

12. Vorrichtung (XAM, 131) zur automatischen Anpassung der internen Konfiguration einer externen Netzwerkschnittstellen (HNIF) an einem Gerät (IE, 100) gemäß Patentanspruch 11, **dadurch gekennzeichnet, dass**
anhand der zugrundeliegenden Information an der Bridge das Dynamic Host Configuration Protocol DHCP aktiviert wird.

13. Vorrichtung (XAM) zur automatischen Anpassung der internen Konfiguration einer externen Netzwerkschnittstellen (HNIF) an einem Gerät (IE, 100) gemäß einem der Patentansprüche 8 bis 12,
**dadurch gekennzeichnet, dass**
es sich bei dem Gerät (IE, 100) um ein Industrial Edge gerät handelt.

14. Vorrichtung (XAM) zur automatischen Anpassung der internen Konfiguration einer externen Netzwerkschnittstellen (HNIFa, HNIFb, 111a, 111b) an einem Gerät (IE, 100) gemäß einem der Patentansprüche 9 bis 13,
**dadurch gekennzeichnet, dass**
die Vorrichtung ein virtuelles Gerät ist.
